# EUROPEAN PATENT APPLICATION

(11) **EP 4 517 902 A1**
(43) Date of publication of application: **05.03.2025**
(21) Application number: 22950486.5
(22) Date of filing: 11.07.2022
(51) Int. Cl.: H01M 10/0567

(54) **ELECTROLYTE FOR SODIUM-ION BATTERY, SODIUM-ION BATTERY COMPRISING SAME, AND ELECTRIC DEVICE**

(71) Applicant: Contemporary Amperex Technology (Hong Kong) Limited, Hong Kong (HK)
(72) Inventor: QIN, Meng, Ningde, Fujian 352100 (CN); GUAN, Yingjie, Ningde, Fujian 352100 (CN); MA, Qingyan, Ningde, Fujian 352100 (CN); ZHAO, Yuzhen, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2022/104914
(87) International publication number: WO 2024/011355

(57) **Abstract**

This application provides a sodium-ion battery electrolytic solution. The electrolytic solution includes an ether compound as a solvent, a sodium borate compound as a sodium salt, and a borate ester compound as an additive, and a percentage of the ether compound in a total solvent of the electrolytic solution is 50 wt% or above. The electrolytic solution can inhibit battery volume expansion and sodium dendrite growing. This application further provides a sodium-ion battery including the electrolytic solution, a battery module, a battery pack, and an electrical device.

## Description

### TECHNICAL FIELD

This application relates to the technical field of secondary batteries, and in particular, to a sodium-ion battery electrolytic solution and a sodium-ion battery including the same, as well as a battery module including the sodium-ion battery, a battery pack, and an electrical device.

### BACKGROUND

**In** recent years, the demand for lithium-ion batteries has been increasing, but limited lithium resources have limited the sustainable development of the lithium-ion batteries. As an important supplement to the lithium-ion batteries, sodium-ion batteries have received more and more attention.

After multiple charge and discharge cycles of the sodium-ion batteries, it is likely to produce volume expansion of the batteries, and it is also likely to grow sodium dendrites on electrodes. The volume expansion of the batteries and the growing of the sodium dendrites will lead to reduced coulombic efficiency of the batteries, a short cycle life, and even an impact on safety performance of the batteries. The existing sodium-ion batteries still need to be improved in the foregoing aspects.

### SUMMARY

This application is made in view of the foregoing subject matter, and the objective of this application is to reduce volume expansion of sodium-ion batteries after cycling and inhibit formation of sodium dendrites on electrodes.

**In** order to achieve the foregoing objective, a first aspect of this application provides a sodium-ion battery electrolytic solution. The electrolytic solution includes an ether compound as a solvent, a sodium borate compound as a sodium salt, and a borate ester compound as an additive, and a percentage of the ether compound in a total solvent of the electrolytic solution is 50 wt% or above.

Thus, through a specific combination in the electrolytic solution, this application can inhibit volume expansion of a sodium-ion battery after cycling and sodium dendrite growing. Thus, the sodium-ion battery including the electrolytic solution has good coulombic efficiency and cycle performance.

In an optional implementation, the borate ester compound has a structure of the following formula (I): 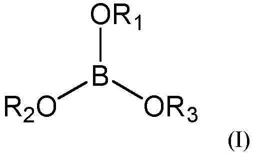
where R₁, R₂ and R₃ are the same or different, and are selected from alkyl, aryl, alkylsilyl, alkenyl, alkynyl, and cyanoalkyl, and the foregoing groups are optionally substituted with halogen, optionally, the halogen is fluorine; optionally, R₁, R₂ and R₃ are the same or different, and are selected from C1-C6 alkyl, C1-C6 haloalkyl, C6-C12 aryl, C6-C12 haloaryl, C1-C6 alkylsilyl, C2-C6 alkenyl, C2-C6 alkynyl, and cyano-C1-C6 alkyl; optionally, at least one of R₁, R₂ and R₃ represents C1-C6 fluoroalkyl or C6-C12 fluoroaryl; and
optionally, the borate ester compound is one or more selected from trimethyl borate, triethyl borate, tripropyl borate, tributyl borate, tris(2,2,2-trifluoroethyl)borate, tris(hexafluoroisopropyl)borate, triphenyl borate, tris(trimethylsilyl)borate, tris(triethylsilyl)borate, tris(triethylsilyl)borate, tris(pentafluorophenyl)borate, (di-n-butyl)(vinyl)borate, (di-n-butyl)(propargyl)borate, and tris(2-cyanoethyl)borate; and further optionally, the borate ester compound is one or more selected from trimethyl borate, triethyl borate, tripropyl borate, and tributyl borate. In particular, a borate ester compound with a smaller molecule is more favorable.

By further selecting the borate ester compound, volume expansion of the battery can be further reduced, and the cycle performance and coulombic efficiency of the battery are improved.

In an optional implementation, the borate ester compound has a content ranging from 0.5 wt% to 10 wt%, optionally, 1 wt% to 5 wt%, e.g., 2 wt%, based on a total mass of the electrolytic solution.

By further selecting the content of the borate ester compound, volume expansion of the battery can be further reduced, and the cycle performance and coulombic efficiency of the battery are improved.

In an optional implementation, the sodium borate compound is one or more selected from sodium difluoroborate and a compound having a structure of the following formula (II): 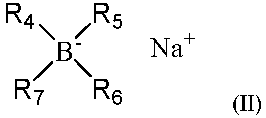
where R₄, R₅, R₆ and R₇ are each independently selected from a halogen atom, alkyl, cyano, alkoxyl, and aryl, where the alkyl, alkoxyl and aryl are optionally substituted with halogen, and optionally, the halogen is fluorine; or R₄ and R₅ and/or R₆ and R₇ form a structure of formula (a) together 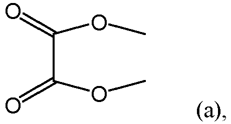
optionally, R₄, R₅, R₆ and R₇ are each independently selected from a halogen atom, C1-C6 alkyl, C1-C6 haloalkyl, cyano, C1-C6 alkoxyl, and phenyl; or R₄ and R₅ and/or R₆ and R₇ form a structure of formula (a) together; optionally, at least one of R₄, R₅, R₆ and R₇ represents C1-C6 fluoroalkyl; and
optionally, the sodium borate compound is one or more selected from sodium difluoroborate, sodium tetrafluoroborate, sodium bis(oxalato)borate, sodium-difluoro(oxalato)borate, sodium tetraphenylborate, sodium tetracyanoborate, sodium tetrakis(trifluoromethyl)borate, sodium difluorobis(trifluoromethyl)borate, sodium pentafluroroethyl trifluoroborate, sodium-dicyano(oxalato)borate, sodium methoxy-tricyanoborate, sodium ethoxy-tricyanoborate, sodium tetramethoxyborate, sodium tetraethoxyborate, and sodium cyano tris(2,2,2-trifluoroethyl)borate.

By further selecting the sodium borate compound, volume expansion of the battery can be further reduced, and the cycle performance and coulombic efficiency of the battery are improved.

In an optional implementation, the sodium borate compound has a concentration ranging from 0.5 M to 8 M, optionally, 1 M to 4 M, based on a total volume of the electrolytic solution.

By further selecting the content of the sodium borate compound, volume expansion of the battery can be further reduced, and the cycle performance and coulombic efficiency of the battery are improved.

In an optional implementation, the ether compound is one or more selected from fatty ether having 4 to 20 carbon atoms, alicyclic ether having 3 to 8 carbon atoms, aromatic ether having 7 to 20 carbon atoms, and crown ether; optionally, the ether compound is one or more selected from ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether; and further optionally, the ether compound is one or more selected from ethylene glycol dimethyl ether, ethylene glycol diethyl ether, and diethylene glycol dimethyl ether.

By further selecting the ether compound, it is conducive to inhibiting sodium dendrite growing and battery volume expansion.

In an optional implementation, a percentage of the ether compound in the total solvent of the electrolytic solution is 60 wt% or above, optionally, 80 wt% or above, and further optionally, the solvent is composed of the ether compound.

By controlling the percentage of the ether compound in the total solvent of the electrolytic solution, it is conducive to inhibiting sodium dendrite growing and battery volume expansion.

A second aspect of this application further provides a sodium-ion battery. The sodium-ion battery includes the electrolytic solution according to the first aspect of this application.

A third aspect of this application provides a battery module. The battery module includes the sodium-ion battery according to the second aspect of this application.

A fourth aspect of this application provides a battery pack. The battery pack includes the battery module according to the third aspect of this application.

A fifth aspect of this application provides an electrical device. The electrical device includes at least one of the sodium-ion battery according to the second aspect of this application, the battery module according to the third aspect of this application, or the battery pack according to the fourth aspect of this application.

### BRIEF DESCRIPTION OF DRAWINGS

FIG. 1 is a schematic diagram of a sodium-ion battery according to an implementation of this application.
FIG. 2 is an exploded view of the sodium-ion battery shown in FIG. 1 according to an implementation of this application.
FIG. 3 is a schematic diagram of a battery module according to an implementation of this application.
FIG. 4 is a schematic diagram of a battery pack according to an implementation of this application.
FIG. 5 is an exploded view of the battery pack shown in FIG. 4 according to an implementation of this application.
FIG. 6 is a schematic diagram of an electrical device using a sodium-ion battery as a power supply according to an implementation of this application.

Reference numerals in the drawings:
1-Battery pack; 2-Upper box body; 3-Lower box body; 4-Battery module; 5-Sodium-ion battery; 51-Shell; 52-Electrode assembly; and 53-Top cap assembly.

### DETAILED DESCRIPTION OF EMBODIMENTS

The following describes in detail and specifically discloses implementations of a sodium-ion battery electrolytic solution, a manufacturing method therefor, a sodium-ion battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject matter recited in the claims.

A "range" disclosed in this application is defined in the form of a lower limit and an upper limit. A given range is defined by a lower limit and an upper limit selected. The selected lower and upper limits define boundaries of a particular range. A range so defined may be inclusive or exclusive of end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4 and 5 are listed, the following ranges are all expectable: 1 to 3, 1 to 4, 1 to 5, 2 to 3, 2 to 4, and 2 to 5. Unless otherwise specified in this application, a numerical range "a to b" is a brief representation of any combination of real numbers between a and b inclusive, where both a and b are real numbers. For example, a numerical range "0 to 5" herein means all real numbers listed between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified, any implementations and optional implementations in this application may be combined with each other to form a new technical solution.

Unless otherwise expressly specified, any technical features and optional technical features in this application may be combined with each other to form a new technical solution.

Unless otherwise expressly specified, all steps in this application may be performed in sequence or at random, and preferably in sequence. For example, that the method includes steps (a) and (b) indicates that the method may include steps (a) and (b) performed in sequence, or steps (b) and (a) performed in sequence. For example, the mention that the method may further include step (c) indicates that step (c) may be added into the method in any sequence. For example, the method may include steps (a), (b), and (c), or may include steps (a), (c), and (b), or may include steps (c), (a), and (b), and so on.

Unless otherwise expressly specified, "include" and "comprise" referred to in this application may be open-ended, or close-ended. For example, the "include" and "comprise" may indicate that other components not listed may also be included or comprised, or that only the listed components may be included or comprised.

Unless otherwise expressly specified, in this application, the term "or" is inclusive. For instance, the phrase "A or B" means "A, B, or both A and B". More specifically, any one of the following conditions satisfies the condition "A or B": A is true (or exists) and B is false (or does not exist); A is false (or does not exist) and B is true (or exists); or both A and B are true (or exist).

After multiple charge and discharge cycles of the sodium-ion batteries, it is likely to produce volume expansion of the batteries, and it is also likely to grow sodium dendrites on electrodes. The volume expansion of the batteries and the growing of the sodium dendrites will lead to reduced coulombic efficiency of the batteries, a short cycle life, and even an impact on safety performance of the batteries. Therefore, for a sodium-ion battery, there is a need to reduce volume expansion after cycling and to inhibit sodium dendrite formation.

The applicant found that when an ether compound is used as a solvent in an electrolytic solution of the sodium-ion battery and a sodium borate compound and a borate ester compound are also included in the electrolytic solution, volume expansion of the obtained sodium-ion battery is significantly reduced, and sodium dendrite growing is inhibited.

Therefore, in an implementation of this application, this application provides a sodium-ion battery electrolytic solution. The sodium-ion battery electrolytic solution includes an ether compound as a solvent, a sodium borate compound as a sodium salt, and a borate ester compound as an additive, where a percentage of the ether compound in a total solvent of the electrolytic solution is 50 wt% or above.

Although the mechanism is not yet clear, the applicant unexpectedly found that: According to this application, by including the large quantity of ether compounds in the solvent of the electrolytic solution and adding the sodium borate compound and the borate ester compound in the electrolytic solution, volume expansion of the sodium-ion battery after multiple cycles can be significantly reduced, and no sodium dendrite grows on an electrode. Not wishing to be confined to theory, it is hypothesized that the combination of the foregoing substances leads to the formation of an inorganic borate-rich solid electrolyte interface (SEI) layer on an electrode surface, which has high mechanical stability, thereby inhibiting volume expansion and sodium dendrite growing. Thus, the sodium-ion battery including the electrolytic solution has good coulombic efficiency and cycle performance.

In some implementations, the borate ester compound has a structure of the following formula (I): 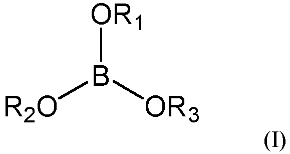
where R₁, R₂ and R₃ are the same or different, and are selected from alkyl, aryl, alkylsilyl, alkenyl, alkynyl, and cyanoalkyl, and the foregoing groups are optionally substituted with halogen, optionally, the halogen is fluorine; optionally, R₁, R₂ and R₃ are the same or different, and are selected from C1-C6 alkyl, C1-C6 haloalkyl, C6-C12 aryl, C6-C12 haloaryl, C1-C6 alkylsilyl, C2-C6 alkenyl, C2-C6 alkynyl, and cyano-C1-C6 alkyl; optionally, at least one of R₁, R₂ and R₃ represents C1-C6 fluoroalkyl or C6-C12 fluoroaryl; and
optionally, the borate ester compound is one or more selected from trimethyl borate, triethyl borate, tripropyl borate, tributyl borate, tris(2,2,2-trifluoroethyl)borate, tris(hexafluoroisopropyl)borate, triphenyl borate, tris(trimethylsilyl)borate, tris(triethylsilyl)borate, tris(triethylsilyl)borate, tris(pentafluorophenyl)borate, (di-n-butyl)(vinyl)borate, (di-n-butyl)(propargyl)borate, and tris(2-cyanoethyl)borate; and further optionally, the borate ester compound is one or more selected from trimethyl borate, triethyl borate, tripropyl borate, and tributyl borate. In particular, a borate ester compound with a smaller molecule is more favorable.

By further selecting the borate ester compound, volume expansion of the battery can be further reduced, and the cycle performance and coulombic efficiency of the battery are improved. In particular, when the borate ester compound includes fluorine, NaF in the SEI layer may further provide protection for a negative electrode.

In some implementations, the borate ester compound has a content ranging from 0.5 wt% to 10 wt%, optionally, 1 wt% to 5 wt%, e.g., 2 wt% to 3 wt%, based on a total mass of the electrolytic solution.

By further selecting the content of the borate ester compound, volume expansion of the battery can be further reduced, and the cycle performance and coulombic efficiency of the battery are improved.

In some implementations, the sodium borate compound is one or more selected from sodium difluoroborate and a compound having a structure of the following formula (II): 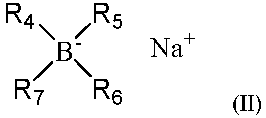 where R₄, R₅, R₆ and R₇ are each independently selected from a halogen atom, alkyl, cyano, alkoxyl, and aryl, where the alkyl, alkoxyl and aryl are optionally substituted with halogen, and optionally, the halogen is fluorine; or R₄ and R₅ and/or R₆ and R₇ form a structure of formula (a) together

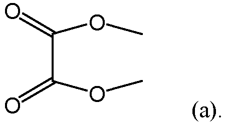

Optionally, R4, R5, R6 and R7 are each independently selected from a halogen atom, C1-C6 alkyl, C1-C6 haloalkyl, cyano, C1-C6 alkoxyl, and phenyl; or R4 and R5 and/or R6 and R7 form a structure of formula (a) together; and optionally, at least one of R4, R5, R6 and R7 represents C1-C6 fluoroalkyl.

Optionally, the sodium borate compound is one or more selected from sodium difluoroborate, sodium tetrafluoroborate, sodium bis(oxalato)borate, sodium-difluoro(oxalato)borate, sodium tetraphenylborate, sodium tetracyanoborate, sodium tetrakis(trifluoromethyl)borate, sodium difluorobis(trifluoromethyl)borate, sodium pentafluroroethyl trifluoroborate, sodium-dicyano(oxalato)borate, sodium methoxy-tricyanoborate, sodium ethoxy-tricyanoborate, sodium tetramethoxyborate, sodium tetraethoxyborate, and sodium cyano tris(2,2,2-trifluoroethyl)borate.

By further selecting the sodium borate compound, volume expansion of the battery can be further reduced, and the cycle performance and coulombic efficiency of the battery are improved. In particular, when the sodium borate compound includes fluorine, NaF in the SEI layer may further provide protection for a negative electrode.

In some implementations, the sodium borate compound has a concentration ranging from 0.5 M to 8 M, optionally, 1 M to 4 M, e.g., 1 M to 2 M, e.g., 1.5 M, based on a total volume of the electrolytic solution.

By further selecting the content of the sodium borate compound, volume expansion of the battery can be further reduced, and the cycle performance and coulombic efficiency of the battery are improved.

In some implementations, the ether compound is one or more selected from fatty ether having 4 to 20 carbon atoms, alicyclic ether having 3 to 8 carbon atoms, aromatic ether having 7 to 20 carbon atoms, and crown ether; optionally, the ether compound is one or more selected from ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether; and further optionally, the ether compound is one or more selected from ethylene glycol dimethyl ether, ethylene glycol diethyl ether, and diethylene glycol dimethyl ether.

By further selecting the ether compound, stable electrode/electrolytic solution interfaces may be constructed on surfaces of a sodium metal negative electrode, a carbon material negative electrode and other non-carbon material negative electrodes to form stable solid electrolyte interfaces (SEIs) and reduce electrochemical polarization, which is conducive to inhibiting sodium dendrite growing and battery volume expansion.

In some implementations, a percentage of the ether compound in the total solvent of the electrolytic solution is 60 wt% or above, or 70 wt% or above, optionally, 80 wt% or above, e.g., 85 wt% or above, or 90 wt% or above, or 95 wt% or above, or 98 wt% or above. Further optionally, the solvent is composed of the ether compound.

By controlling the percentage of the ether compound in the total solvent of the electrolytic solution, a stable electrode/electrolytic solution interface can be constructed on a surface of a negative electrode to form a stable solid electrolyte interface, which is conducive to inhibiting sodium dendrite growing and battery volume expansion, and may further improve the cycle performance and coulombic efficiency of the battery.

As may be understood by a person skilled in the art, in the sodium-ion battery, the electrolytic solution serves to conduct ions between a positive electrode plate and a negative electrode plate. The electrolytic solution includes an electrolyte salt and a solvent. In the sodium-ion battery of this application, the electrolyte salt is a sodium salt.

The sodium borate compound itself may be used as an electrolyte salt. In some implementations, in addition to the sodium borate compound, the electrolyte salt may further include one or more substances selected from NaClO₄, NaPF₆, NaBF₄, NaTFSI (sodium bis(trifluoromethylsulfonyl)imide), and NaFSI (sodium bis(fluorosulfonyl)imide). In some implementations, the electrolyte salt has a total molar concentration ranging from 0.5 M to 8 M, optionally, 1 M to 4 M, based on a total volume of the electrolytic solution.

In some implementations, in addition to the ether compound, the solvent of the electrolytic solution further includes at least one solvent selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some implementations, the electrolytic solution further optionally includes other additives. For example, the additive may include a negative film-forming additive and a positive film-forming additive. The additive may further include an additive capable of improving specified performance of the battery, for example, an additive for improving overcharge performance of the battery, or an additive for improving high- or low-temperature performance of the battery.

Additionally, the following describes a sodium-ion battery, a battery module, a battery pack, and an electrical device according to this application with due reference to the drawings.

In an implementation of this application, a sodium-ion battery is provided. The sodium-ion battery includes the electrolytic solution according to this application.

Typically, the sodium-ion battery includes a positive electrode plate, a negative electrode plate, an electrolytic solution and a separator. In the charging and discharging processes of the battery, active ions are intercalated and deintercalated between the positive electrode plate and the negative electrode plate back and forth. The electrolytic solution serves to conduct ions between the positive electrode plate and the negative electrode plate. The separator is disposed between the positive electrode plate and the negative electrode plate, and primarily serves to prevent a short circuit between a positive electrode and a negative electrode while allowing ions to pass through.

### [Positive electrode plate]

The positive electrode plate includes a positive current collector and a positive electrode film layer disposed on at least one surface of the positive current collector, and the positive electrode film layer includes a positive active material.

As an example, the positive current collector is provided with two opposite surfaces in a thickness direction of the positive current collector, and the positive electrode film layer is disposed on either or both of the two opposite surfaces of the positive current collector.

In some implementations, the positive current collector may be a conductive carbon plate, metal foil, carbon-coated metal foil, a porous metal plate or a composite current collector, where a conductive carbon material of the conductive carbon plate may be one or more of superconductive carbon, acetylene black, carbon black, Ketjen black, carbon dots, carbon nanotubes, graphite, graphene, and carbon nanofibers, and metal materials of the metal foil, the carbon-coated metal foil and the porous metal plate may be each independently at least one selected from copper, aluminum, nickel and stainless steel. The composite current collector may be a composite current collector formed by compositing the metal foil with a polymer base film.

The positive current collector may be, for example, one or more of copper foil, aluminum foil, nickel foil, stainless steel foil, a stainless steel mesh and carbon-coated aluminum foil, preferably, the aluminum foil.

In some implementations, the positive electrode active material may be a positive electrode active material that is well known for use in the sodium-ion battery in the art. As an example, the positive electrode active material may include at least one of sodium transition metal oxide, a polyanionic compound and a Prussian blue compound. However, this application is not limited to such materials.

Optionally, in the sodium transition metal oxide, transition metal may be at least one of Mn, Fe, Ni, Co, Cr, Cu, Ti, Zn, V, Zr and Ce. The sodium transition metal oxide is for example NaₓMO₂, where M is one or more of Ti, V, Mn, Co, Ni, Fe, Cr and Cu, and 0 < x ≤ 1.

Optionally, the polyanionic compound may be a class of compounds having a sodium ion, a transition metal ion and a tetrahedral (YO₄)ⁿ⁻ anion unit. The transition metal may be at least one of Mn, Fe, Ni, Co, Cr, Cu, Ti, Zn, V, Zr and Ce; Y may be at least one of P, S and Si; and n represents the valence of (YO₄)ⁿ⁻.

The polyanionic compound may further be a class of compounds having a sodium ion, a transition metal ion, a tetrahedral (YO₄)ⁿ⁻ anion unit, and a halogen anion. The transition metal may be at least one of Mn, Fe, Ni, Co, Cr, Cu, Ti, Zn, V, Zr and Ce; Y may be at least one of P, S and Si; n represents the valence of (YO₄)ⁿ⁻; and the halogen may be at least one of F, Cl and Br.

The polyanionic compound may further be a class of compounds having a sodium ion, a tetrahedral (YO₄)ⁿ⁻ anion unit, a polyhedral unit (ZO_{y})^{m+}, and an optional halogen anion. Y may be at least one of P, S and Si, and n represents the valence of (YO₄)ⁿ⁻; Z represents a transition metal which may be at least one of Mn, Fe, Ni, Co, Cr, Cu, Ti, Zn, V, Zr and Ce, m represents the valence of (ZO_{y})^{m+}; and the halogen may be at least one of F, Cl and Br.

The polyanionic compound is, for example, at least one of NaFePO₄, Na₃V₂(PO₄)₃, NaM'PO₄F (M' is one or more of V, Fe, Mn and Ni) and Na₃(VO_{y})₂(PO₄)₂F_{3-2y} (0 ≤ y ≤ 1).

The Prussian blue compound may be a class of compounds having a sodium ion, a transition metal ion and a cyanide ion (CN⁻). The transition metal may be at least one of Mn, Fe, Ni, Co, Cr, Cu, Ti, Zn, V, Zr and Ce. The Prussian blue compound is for example NaₐMe_{b}Me'_{c} (CN)₆, where Me and Me' are each independently at least one of Ni, Cu, Fe, Mn, Co, and Zn, 0 < a ≤ 2, 0 < b < 1, and 0 < c <1.

**In** some implementations, the positive electrode film layer further optionally includes a binder. As an example, the binder may be at least one of polyvinylidene fluoride (PVDF), polytetrafluoroethylene (PTFE), polyacrylic acid (PAA), polyvinyl alcohol (PVA), poly(ethylene-co-vinyl acetate) (EVA), styrene-butadiene rubber (SBR), carboxymethyl cellulose (CMC), sodium alginate (SA), polymethacrylic acid (PMA), and carboxymethyl chitosan (CMCS).

In some implementations, the positive electrode film layer further optionally includes a conductive agent. As an example, the conductive agent may be at least one of superconductive carbon, acetylene black, carbon black, Ketjen black, carbon dots, carbon nanotubes, graphite, graphene, and carbon nanofibers.

In some implementations, the positive electrode plate may be prepared according to the following method: dispersing the foregoing ingredients for preparing the positive electrode plate, such as the positive active material, the conductive agent, the binder and any other ingredients into a solvent (such as N-methylpyrrolidone) to form a positive slurry; and coating the positive current collector with the positive slurry, and performing procedures such as drying and cold calendering to obtain the positive electrode plate.

### [Negative electrode plate]

The negative electrode plate includes a negative current collector and a negative electrode film layer disposed on at least one surface of the negative current collector, and the negative electrode film layer includes a negative active material.

As an example, the negative current collector is provided with two opposite surfaces in a thickness direction of the negative current collector, and the negative electrode film layer is disposed on either or both of the two opposite surfaces of the negative current collector.

In some implementations, the negative current collector includes, but is not limited to: copper foil, nickel foil, stainless steel foil, titanium foil, nickel foam, copper foam, or a composite current collector coated with a conductive metal.

In some implementations, the negative electrode active material includes at least one of graphite, sodium metal, sodium alloy, carbon black (hard carbon or soft carbon), a silicon material, a silicon oxide material, a tin material, a tin oxide material, or a silicon-carbon composite.

In some implementations, the negative electrode active material includes graphite. The graphite may be artificial graphite or natural graphite. For a graphite system, a sodium ion and an ether compound molecule may highly reversibly undergo a co-intercalation reaction in the graphite to form a stable ternary graphite intercalation compound, which is conducive to improving initial coulombic efficiency and rate performance of the battery.

In some implementations, the negative electrode film layer further optionally includes a binder. The binder includes polyvinyl alcohol, carboxymethyl cellulose, hydroxypropyl cellulose, diacetyl cellulose, polyvinyl chloride, carboxylated polyvinyl chloride, polyvinyl fluoride, an ethylidene oxygen-containing polymer, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like.

In some implementations, the negative electrode film layer further optionally includes a conductive agent. The conductive agent may be selected from natural graphite, artificial graphite, carbon black, acetylene black, Ketjen black, carbon fibers, metal powder, metal fibers, copper, nickel, aluminum, silver, a polyphenylene derivative, or the like.

In some implementations, the negative electrode film layer further optionally includes other agents, such as a thickener (for example, sodium carboxymethyl cellulose (CMC-Na)).

In some implementations, the negative electrode plate may be prepared according to the following method: dispersing the foregoing ingredients for preparing the negative electrode plate, such as the negative active material, the conductive agent, the binder, and any other ingredients into a solvent (such as deionized water) to form a negative slurry; and coating a negative current collector with the negative slurry, and performing procedures such as drying and cold calendering to obtain the negative electrode plate.

### [Separator]

In some implementations, the sodium-ion battery further includes a separator. The type of the separator is not particularly limited in this application, and may be any well-known separator with a porous structure that has good chemical stability and mechanical stability.

In some implementations, the material of the separator may be at least one selected from glass fibers, a nonwoven fabric, polyethylene, polypropylene and polyvinylidene fluoride. The separator may be a single-layer film, and may also be a multilayer composite film, without being particularly limited. When the separator is the multilayer composite film, materials of layers may be the same or different, without being particularly limited.

In some implementations, the positive electrode plate, the negative electrode plate and the separator may be made into an electrode assembly through a winding process or a stacking process.

In some implementations, the sodium-ion battery may include an outer package. The outer package may be configured to package the foregoing electrode assembly and electrolytic solution.

In some implementations, the outer package of the sodium-ion battery may be a hard shell such as a hard plastic shell, an aluminum shell, a steel shell, or the like. The outer package of the sodium-ion battery may also be a soft package such as a pouch-type soft package. The soft package may be made of plastic such as polypropylene, polybutylene terephthalate, or polybutylene succinate.

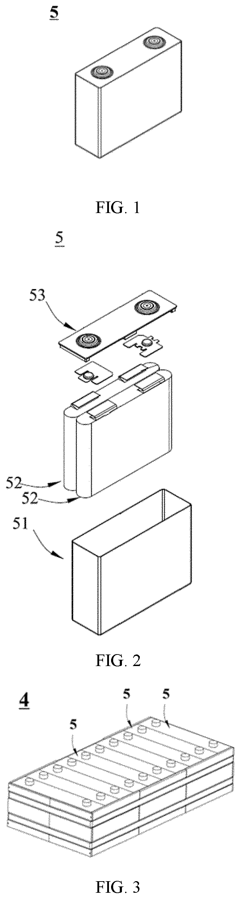

The shape of the sodium-ion battery is not particularly limited in this application, and may be cylindrical, prismatic or any other shapes. For example, FIG. 1 is a sodium-ion battery 5 of a prismatic structure as an example.

In some implementations, referring to FIG. 2, an outer package may include a shell 51 and a cover plate 53. The shell 51 may include a bottom plate and side plates connected to the bottom plate, and an accommodating cavity is enclosed by the bottom plate and the side plates. The shell 51 is provided with an opening communicating with the accommodating cavity, and the cover plate 53 may cover the opening to close the accommodating cavity. A positive electrode plate, a negative electrode plate and a separator may form an electrode assembly 52 through a winding process or a stacking process. The electrode assembly 52 is packaged in the accommodating cavity. The electrode assembly 52 is infiltrated with an electrolytic solution. There may be one or more electrode assemblies 52 in the sodium-ion battery 5, which may be selected by a person skilled in the art according to specific practical needs.

In some implementations, the sodium-ion battery may be assembled into a battery module, there may be one or more sodium-ion batteries in the battery module, and the specific number may be selected by a person skilled in the art according to the application and capacity of the battery module.

FIG. 3 is a battery module 4 as an example. Referring to FIG. 3, in the battery module 4, a plurality of sodium-ion batteries 5 may be sequentially arrayed in a length direction of the battery module 4. Certainly, the plurality of sodium-ion batteries 5 may also be laid out in any other manners. Further, the plurality of sodium-ion batteries 5 may be fixed through a fastener.

Optionally, the battery module 4 may further include a housing with an accommodating space, and the plurality of sodium-ion batteries 5 are accommodated in the accommodating space.

In some implementations, the foregoing battery module may further be assembled into a battery pack, there may be one or more battery modules in the battery pack, and the specific number may be selected by a person skilled in the art according to the application and capacity of the battery pack.

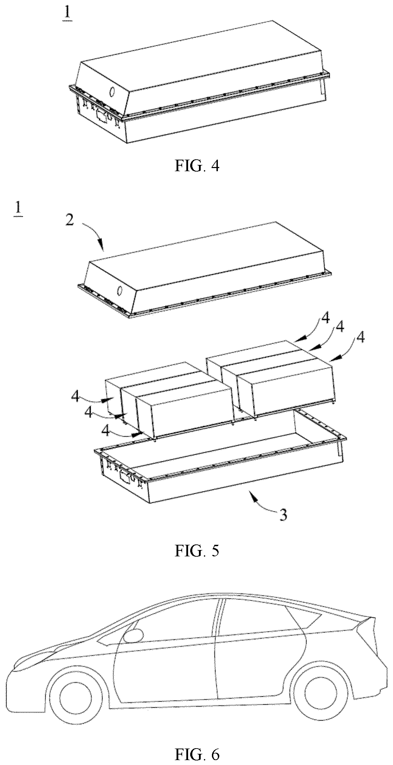

FIG. 4 and FIG. 5 are an exemplary battery pack 1. Referring to FIG. 4 and FIG. 5, the battery pack 1 may include a battery box and a plurality of battery modules 4 disposed in the battery box. The battery box includes an upper box body 2 and a lower box body 3, and the upper box body 2 may cover the lower box body 3 to form a closed space for accommodating the battery modules 4. The plurality of battery modules 4 may be laid out in the battery box in any manners.

Additionally, this application further provides an electrical device. The electrical device includes at least one of the sodium-ion battery, the battery module or the battery pack provided by this application. The sodium-ion battery, the battery module or the battery pack may be used as a power supply of the electrical device, and may also be used as an energy storage unit of the electrical device. The electrical device may include, but not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

As the electrical device, the sodium-ion battery, the battery module or the battery pack may be selected according to the usage needs of the electrical device.

FIG. 6 is an exemplary electrical device. The electrical device is a battery electric vehicle, a hybrid electric vehicle, a plug-in hybrid electric vehicle, or the like. In order to meet the needs of the electrical device for high power and high energy density of a sodium-ion battery, a battery pack or a battery module may be used.

As another example, a device may be a mobile phone, a tablet computer, a laptop computer, or the like. The device is typically required to be thin and light, and may use a sodium-ion battery as a power supply.

### Embodiment

The embodiments of this application are illustrated below. The embodiments described below are exemplary merely for the purpose of explaining this application, and shall not be construed as limiting this application. Where specific technologies or conditions are not indicated in the embodiments, follow technologies or conditions described in documents in the art or a product specification. Reagents or instruments used without indication of manufacturers are conventional products that are commercially available.

### Embodiment 1

### [Preparation of positive electrode plate]

Fully dissolve, by weight, 10 parts of polyvinylidene fluoride as a binder into N-methylpyrrolidone, and add, by weight, 10 parts of carbon black as a conductive agent and 80 parts of Na₄Fe₃(PO₄)₂(P₂O₇) to make a uniformly dispersed slurry. Uniformly coat a surface of aluminum foil with the slurry, and transfer the aluminum foil into a vacuum drying oven to be completely dried. Roll an obtained electrode plate, and punch same to obtain a positive electrode plate. The positive electrode plate has a load capacity of 0.3 g/1540.25 mm².

### [Preparation of negative electrode plate]

First, put a hard carbon material into a mixed solution of concentrated sulfuric acid and concentrated nitric acid with a volume ratio of 3:1 to be stirred for 4 h, wash and filter the mixture using deionized water, and put the mixture into an oven for drying at 80°C. Add a carbon material undergoing the foregoing treatment and high polymer styrene-butadiene rubber (SBR) into N-methylpyrrolidone at a weight ratio of 95:5 to be stirred into a uniform slurry, coat copper foil with the slurry and dry the copper foil to obtain a carbon material coating for use, where the coating amount is 0.010 g/1540.25 mm².

In an argon atmosphere, add sodium metal into a stainless steel crucible to be heated to 200°C until the sodium metal is completely molten, add powder with a sodium-bismuth alloy composition into liquid sodium metal to be fully stirred for 2 h to guarantee that the metal powder and the sodium metal liquid are uniformly mixed, and cool the mixture to obtain a sodium metal alloy active substance, where the content of bismuth in the sodium metal alloy active substance is 5 wt%. Composite the sodium metal alloy active substance onto a surface of the carbon material coating through cold calendering to obtain a negative electrode plate, where the sodium metal alloy active substance has a load capacity of 0.025 g/1540.25 mm².

### [Preparation of electrolytic solution]

In an argon atmosphere glove box (H₂O < 0.1ppm, O₂ < 0.1ppm), dissolve sodium-difluoro(oxalato)borate and trimethyl borate into glycol dimethyl ether as an organic solvent to be uniformly stirred to obtain an electrolytic solution in which the trimethyl borate has a concentration of 2 wt% and the sodium-difluoro(oxalato)borate (NaDFOB) has a concentration of 1.5 mol/L, i.e., the electrolytic solution in Embodiment 1.

### [Separator]

Use a polypropylene film as the separator.

### [Preparation of sodium-ion battery]

Stack the foregoing positive electrode plate, separator and negative electrode plate in sequence in such a way that the separator is located between the positive electrode plate and the negative electrode plate, and add the foregoing electrolytic solution to be assembled into a stacked battery.

### Embodiments 2-33

The remaining steps of Embodiments 2-33 are identical to those of Embodiment 1 except that a formulation of the electrolytic solution is changed as shown in Table 1.

### Embodiment 34

The remaining steps are identical to those in Embodiment 1 except that the negative electrode plate is prepared according to the following method:

Fully dissolve, by weight, 5 parts of sodium carboxymethyl cellulose as a binder into deionized water, and add, by weight, 95 parts of graphite to make a uniformly dispersed slurry. Uniformly coat a surface of copper foil with the slurry, and transfer the copper foil into a vacuum drying oven to be completely dried. Roll an obtained electrode plate, and punch same to obtain a negative electrode plate. The negative electrode plate has a load capacity of 0.035 g/1540.25 mm².

### Comparative Embodiment 1-5

The remaining steps of Comparative Embodiments 1-5 are identical to those in Embodiment 1 except that a formulation of the electrolytic solution is changed as shown in Table 1.

### Battery performance test

### [Coulombic efficiency]

At 25°C, charge the sodium-ion battery at a constant current of 1/3 C to 3.65 V, and charge the sodium-ion battery at a constant voltage of 3.65 V until the current is reduced to 0.05 C, thus obtaining a first charge capacity (Cc1); and discharge the sodium-ion battery at a constant current of 1/3 C to 2.5 V, thus obtaining a first discharge capacity (Cd1). The coulombic efficiency of the sodium-ion battery is calculated according to the following formula:

Coulombic efficiency of sodium-ion battery = first discharge capacity (Cd1)/first charge capacity (Cc1)

### [Capacity retention rate]

At 25°C, charge the sodium-ion battery at a constant current of 1 C to 3.65 V, charge the sodium-ion battery at a constant voltage of 3.65 V until the current is reduced to 0.05 C, and discharge the sodium-ion battery at a constant current of 1 C to 2.5 V, thus obtaining a discharge capacity (Cd1) of the first cycle; and repeat charging and discharging in such a way until the n^{th} cycle is reached, thus obtaining a discharge capacity of the sodium-ion battery after n cycles, which is donated as Cdn. The capacity retention rate of the sodium-ion battery is calculated according to the following formula: Capacity retention rate = discharge capacity after n cycles (Cdn)/discharge capacity of first cycle (Cd1).

### [Volume expansion]

Immerge the sodium-ion battery into a container containing silicone oil, and record a height of a liquid level of the silicone oil at this time; charge and discharge the battery for a designated number of cycles, so that the liquid level of the silicone oil rises under the action of battery volume deformation pressure, and observe and record a height of the liquid level of the silicone oil in the container at this time. Obtain a height difference of liquid level rising based on the heights of the liquid levels of the silicone oil before and after charge and discharge cycling of the battery, and calculate an expanded volume produced by battery cycling.

### [Sodium dendrite]

Disassemble the sodium-ion battery after 200 cycles in an argon atmosphere glove box (H₂O < 0.1 ppm, O₂ < 0.1 ppm), and visually observe surface topography of the negative electrode plate through an optical microscope to determine whether a sodium dendrite is formed. No white dots exiting on the negative electrode plate is determined as no sodium dendrite condition, sporadic white dots exiting on the negative electrode plate is determined as a slight sodium dendrite condition, and a significant number of white dots exiting on the negative electrode plate is determined as a serious sodium dendrite condition.

Electrolytic solution compositions and battery performance test results of Embodiments 1-34 and Comparative Embodiments 1-5 are shown in Table 1 below.

**Table 1**

| Number | Sodium salt and concentrati on | Organic solvent | Additive and content (wt%) | Negativ e electrod e active material | Coulo mbic efficie ncy (%) | Capacity retention rate after 200 cycles (%) | Volume expansion after 200 cycles (ml) | Sodiu m dendrit e |
|---|---|---|---|---|---|---|---|---|
| Embodi ment 1 | 1.5M NaDFOB | Glycol dimethyl ether | 2% trimethyl borate | Hard carbon and sodium metal | 96.5 | 90.1 | 0.82 | none |
| Embodi ment 2 | 1.5M NaDFOB | Glycol dimethyl ether | 2% triethyl borate | Hard carbon and sodium metal | 95.3 | 89.4 | 0.94 | none |
| Embodi ment 3 | 1.5M NaDFOB | Glycol dimethyl ether | 2% tris(2,2,2-trifluoroet hyl)borate | Hard carbon and sodium metal | 94.0 | 87.3 | 1.13 | none |
| Embodi ment 4 | 1.5M NaDFOB | Glycol dimethyl ether | 2% tris(triethy lsilyl)bora te | Hard carbon and sodium metal | 93.2 | 85.4 | 1.17 | none |
| Embodi ment 5 | 1.5M NaDFOB | Glycol dimethyl ether | 2% tris(2-cyanoethy l)borate | Hard carbon and sodium metal | 92.9 | 84.6 | 1.23 | none |
| Embodi ment 6 | 1.5M NaDFOB | Glycol dimethyl ether | 1% trimethyl borate | Hard carbon and sodium metal | 94.9 | 89.1 | 0.97 | none |
| Embodi ment 7 | 1.5M NaDFOB | Glycol dimethyl ether | 3% trimethyl borate | Hard carbon and sodium metal | 96.1 | 90.0 | 0.85 | none |
| Embodi ment 8 | 1.5M NaDFOB | Glycol dimethyl ether | 5% trimethyl borate | Hard carbon and sodium metal | 95.5 | 89.8 | 0.90 | none |
| Embodi ment 9 | 1.5M NaDFOB | Glycol dimethyl ether | 0.5% trimethyl borate | Hard carbon and sodium metal | 90.3 | 82.9 | 1.44 | none |
| Embodi ment 10 | 1.5M NaDFOB | Glycol dimethyl ether | 10% trimethyl borate | Hard carbon and sodium metal | 92.6 | 84.2 | 1.25 | none |
| Embodi ment 11 | 1M NaDFOB | Glycol dimethyl ether | 2% trimethyl borate | Hard carbon and sodium metal | 91.1 | 83.2 | 1.36 | none |
| Embodi ment 12 | 4M NaDFOB | Glycol dimethyl ether | 2% trimethyl borate | Hard carbon and sodium metal | 90.2 | 82.4 | 1.49 | none |
| Embodi ment 13 | 0.5M NaDFOB | Glycol dimethyl ether | 2% trimethyl borate | Hard carbon and sodium metal | 88.1 | 81.6 | 1.76 | none |
| Embodi ment 14 | 8M NaDFOB | Glycol dimethyl ether | 2% trimethyl borate | Hard carbon and sodium metal | 87.4 | 80.1 | 1.82 | none |
| Embodi ment 15 | 1.5M Sodium bis(oxalato )borate | Glycol dimethyl ether | 2% trimethyl borate | Hard carbon and sodium metal | 93.3 | 85.4 | 1.16 | none |
| Embodi ment 16 | 1.5M Sodium tetrafluoro borate | Glycol dimethyl ether | 2% trimethyl borate | Hard carbon and sodium metal | 92.2 | 84.0 | 1.27 | none |
| Embodi ment 17 | 1.5M Sodium tetraphenyl borate | Glycol dimethyl ether | 2% trimethyl borate | Hard carbon and sodium metal | 91.5 | 83.7 | 1.32 | none |
| Embodi ment 18 | 1.5M Sodium tetracyanob orate | Glycol dimethyl ether | 2% trimethyl borate | Hard carbon and sodium metal | 91.1 | 83.4 | 1.35 | none |
| Embodi ment 19 | 1M NaDFOB + 0.5 M NaPF₆ | Glycol dimethyl ether | 2% trimethyl borate | Hard carbon and sodium metal | 90.5 | 92.6 | 1.41 | none |
| Embodi ment 20 | 0.5M NaDFOB + 1 M NaPF₆ | Glycol dimethyl ether | 2% trimethyl borate | Hard carbon and sodium metal | 88.0 | 81.1 | 1.79 | none |
| Embodi ment 21 | 1.5M NaDFOB | Glycol dimethyl ether | 2% triphenyl borate | Hard carbon and sodium metal | 92.5 | 84.2 | 1.27 | none |
| Embodi ment 22 | 1.5M NaDFOB | Glycol dimethyl ether | 2% tris(pentaf luorophen yl)borate | Hard carbon and sodium metal | 92.1 | 83.7 | 1.32 | none |
| Embodi ment 23 | 1.5M NaDFOB | Glycol dimethyl ether | 2% (di-n-butyl)(vin yl)borate | Hard carbon and sodium metal | 91.5 | 93.1 | 1.37 | none |
| Embodi ment 24 | 1.5M NaDFOB | Glycol dimethyl ether | 2% (di-n-butyl)(pro pargyl)bor ate | Hard carbon and sodium metal | 91.1 | 89.6 | 1.41 | none |
| Embodi ment 25 | 1.5M NaDFOB | Ethylene glycol diethyl ether | 2% trimethyl borate | Hard carbon and sodium metal | 95.5 | 89.6 | 0.89 | none |
| Embodi ment 26 | 1.5M NaDFOB | Diethylene glycol dimethyl ether | 2% trimethyl borate | Hard carbon and sodium metal | 94.1 | 88.0 | 0.97 | none |
| Embodi ment 27 | 1.5M NaDFOB | 1,3-dioxolane | 2% trimethyl borate | Hard carbon and sodium metal | 93.4 | 85.5 | 1.12 | none |
| Embodi ment 28 | 1.5M NaDFOB | Tetrahydrofur an | 2% trimethyl borate | Hard carbon and sodium metal | 92.1 | 84.0 | 1.25 | none |
| Embodi ment 29 | 1.5M NaDFOB | Methyltetrahy drofuran | 2% trimethyl borate | Hard carbon and sodium metal | 91.3 | 83.5 | 1.32 | none |
| Embodi ment 30 | 1.5M NaDFOB | Diphenyl ether | 2% trimethyl borate | Hard carbon and sodium metal | 91.0 | 83.3 | 1.37 | none |
| Embodi ment 31 | 1.5M NaDFOB | Glycol dimethyl ether and ethyl methyl carbonate (at a mass ratio of 5:5) | 2% trimethyl borate | Hard carbon and sodium metal | 86.0 | 78.8 | 2.15 | none |
| Embodi ment 32 | 1.5M NaDFOB | Glycol dimethyl ether and ethyl methyl carbonate (at a mass ratio of 6:4) | 2% trimethyl borate | Hard carbon and sodium metal | 86.5 | 79.1 | 1.98 | none |
| Embodi ment 33 | 1.5M NaDFOB | Glycol dimethyl ether and ethyl methyl carbonate (at a mass ratio of 8:2) | 2% trimethyl borate | Hard carbon and sodium metal | 87.2 | 80.0 | 1.88 | none |
| Embodi ment 34 | 1.5M NaDFOB | Glycol dimethyl ether | 2% trimethyl borate | Graphite | 97.1 | 90.6 | 0.79 | none |
| Compara tive Embodi ment 1 | 1.5M NaPF₆ | Glycol dimethyl ether | 2% trimethyl borate | Hard carbon and sodium metal | 83.3 | 71.7 | 4.33 | slight |
| Compara tive Embodi ment 2 | 1.5M NaDFOB | Glycol dimethyl ether | / | Hard carbon and sodium metal | 84.5 | 73.6 | 3.52 | slight |
| Compara tive Embodi ment 3 | 1.5M NaPF₆ | Glycol dimethyl ether | / | Hard carbon and sodium metal | 81.4 | 70.4 | 5.11 | serious |
| Compara tive Embodi ment 4 | 1.5M NaDFOB | Glycol dimethyl ether and ethyl methyl carbonate (at a mass ratio of 1:9) | 2% trimethyl borate | Hard carbon and sodium metal | 79.5 | 69.3 | 5.83 | serious |
| Compara tive Embodi ment 5 | 1.5M NaDFOB | Glycol dimethyl ether and ethyl methyl carbonate (at a mass ratio of 4:6) | 2% trimethyl borate | Hard carbon and sodium metal | 83.4 | 72.6 | 3.73 | slight |

As can be seen from the foregoing results, according to Embodiments 1-34, by using the electrolytic solution including an ether compound as a solvent, a sodium borate compound as a sodium salt, and a borate ester compound as an additive, volume expansion of the battery after multiple cycles is very small, no sodium dendrite is presented on an electrode, and the battery has a high capacity retention rate and first coulombic efficiency. In particular, when borate ester has a content ranging from 1 wt% to 5 wt%, or sodium borate has a content ranging from 1 to 4 M, volume expansion of the battery is further reduced, and the capacity retention rate and first coulombic efficiency are further improved.

However, in contrast, in Comparative Embodiments 1-5, an ether solvent, a sodium borate compound and a borate ester compound are not simultaneously included, or a percentage of the ether solvent in a total solvent is too low, after cycling, sodium dendrites are presented respectively, and the volume of a battery significantly expands, and the capacity retention rate and first coulombic efficiency of the battery are lower than those in the embodiments of this application.

It is hereby noted that this application is not limited to the foregoing implementations. The foregoing implementations are merely examples. Any and all implementations with substantively the same constituents or exerting the same effects as the technical ideas hereof without departing from the scope of the technical solutions of this application still fall within the technical scope of this application. In addition, all kinds of variations of the implementations conceivable by a person skilled in the art and any other implementations derived by combining some constituents of the implementations hereof without departing from the scope of the subject-matter of this application still fall within the scope of this application.

## Claims

1. A sodium-ion battery electrolytic solution, wherein the electrolytic solution comprises an ether compound as a solvent, a sodium borate compound as a sodium salt, and a borate ester compound as an additive, and a percentage of the ether compound in a total solvent of the electrolytic solution is 50 wt% or above.

2. The sodium-ion battery electrolytic solution according to claim 1, wherein the borate ester compound has a structure of a following formula (I): 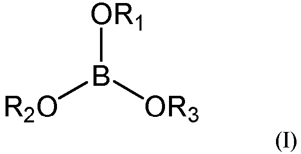
where R₁, R₂ and R₃ are the same or different, and are selected from alkyl, aryl, alkylsilyl, alkenyl, alkynyl, and cyanoalkyl, and the foregoing groups are optionally substituted with halogen, optionally, the halogen is fluorine; optionally, R₁, R₂ and R₃ are the same or different, and are selected from C1-C6 alkyl, C1-C6 haloalkyl, C6-C12 aryl, C6-C12 haloaryl, C1-C6 alkylsilyl, C2-C6 alkenyl, C2-C6 alkynyl, and cyano-C1-C6 alkyl; optionally, at least one of R₁, R₂ and R₃ represents C1-C6 fluoroalkyl or C6-C12 fluoroaryl; and
optionally, the borate ester compound is one or more selected from trimethyl borate, triethyl borate, tripropyl borate, tributyl borate, tris(2,2,2-trifluoroethyl)borate, tris(hexafluoroisopropyl)borate, triphenyl borate, tris(trimethylsilyl)borate, tris(triethylsilyl)borate, tris(triethylsilyl)borate, tris(pentafluorophenyl)borate, (di-n-butyl)(vinyl)borate, (di-n-butyl)(propargyl)borate, and tris(2-cyanoethyl)borate; and further optionally, the borate ester compound is one or more selected from trimethyl borate, triethyl borate, tripropyl borate, and tributyl borate.

3. The sodium-ion battery electrolytic solution according to claim 1 or 2, wherein the borate ester compound has a content ranging from 0.5 wt% to 10 wt%, optionally, 1 wt% to 5 wt%, based on a total mass of the electrolytic solution.

4. The sodium-ion battery electrolytic solution according to any one of claims 1 to 3, wherein the sodium borate compound is one or more selected from sodium difluoroborate and a compound having a structure of a following formula (II): 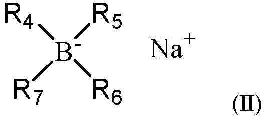
where R₄, R₅, R₆ and R₇ are each independently selected from a halogen atom, alkyl, cyano, alkoxyl, and aryl, where the alkyl, alkoxyl and aryl are optionally substituted with halogen, and optionally, the halogen is fluorine; or R₄ and R₅ and/or R₆ and R₇ form a structure of formula (a) together 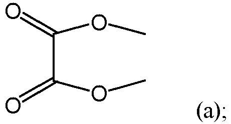
optionally, R₄, R₅, R₆ and R₇ are each independently selected from a halogen atom, C1-C6 alkyl, C1-C6 haloalkyl, cyano, C1-C6 alkoxyl, and phenyl; or R₄ and R₅ and/or R₆ and R₇ form a structure of formula (a) together; optionally, at least one of R₄, R₅, R₆ and R₇ represents C1-C6 fluoroalkyl; and
optionally, the sodium borate compound is one or more selected from sodium difluoroborate, sodium tetrafluoroborate, sodium bis(oxalato)borate, sodium-difluoro(oxalato)borate, sodium tetraphenylborate, sodium tetracyanoborate, sodium tetrakis(trifluoromethyl)borate, sodium difluorobis(trifluoromethyl)borate, sodium pentafluroroethyl trifluoroborate, sodium-dicyano(oxalato)borate, sodium methoxy-tricyanoborate, sodium ethoxy-tricyanoborate, sodium tetramethoxyborate, sodium tetraethoxyborate, and sodium cyano tris(2,2,2-trifluoroethyl)borate.

5. The sodium-ion battery electrolytic solution according to any one of claims 1 to 4, wherein the sodium borate compound has a concentration ranging from 0.5 M to 8 M, optionally, 1 M to 4 M, based on a total volume of the electrolytic solution.

6. The sodium-ion battery electrolytic solution according to any one of claims 1 to 5, wherein the ether compound is one or more selected from fatty ether having 4 to 20 carbon atoms, alicyclic ether having 3 to 8 carbon atoms, aromatic ether having 7 to 20 carbon atoms, and crown ether; optionally, the ether compound is one or more selected from ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether; and further optionally, the ether compound is one or more selected from ethylene glycol dimethyl ether, ethylene glycol diethyl ether, and diethylene glycol dimethyl ether.

7. The sodium-ion battery electrolytic solution according to any one of claims 1 to 6, wherein a percentage of the ether compound in the total solvent of the electrolytic solution is 60 wt% or above, optionally, 80 wt% or above, and further optionally, the solvent is composed of the ether compound.

8. A sodium-ion battery, **characterized by** comprising the electrolytic solution according to any one of claims 1 to 7.

9. The sodium-ion battery according to claim 8, wherein a negative electrode active material of a negative electrode comprises graphite.

10. A battery module, **characterized by** comprising the sodium-ion battery according to claim 8 or 9.

11. A battery pack, **characterized by** comprising the battery module according to claim 10.

12. An electrical device, **characterized by** comprising at least one selected from the sodium-ion battery according to claim 8 or 9, the battery module according to claim 10, or the battery pack according to claim 11.
